# EUROPÄISCHE PATENTSCHRIFT

(11) **EP 0 417 219 B1**
(45) Veröffentlichungstag und Bekanntmachung des Hinweises auf die Patenterteilung: **27.04.1994**
(21) Anmeldenummer: 90903133.8
(22) Anmeldetag: 26.02.1990
(51) Int. Cl.: G01G 13/22, G01G 21/30, G01G 21/22

(54) **Drehgefässwaage**
Tipping-receptacle balance
Balance à récipient tournant

(30) Priorität: 17.03.1989 CH 1000/89
(43) Veröffentlichungstag der Anmeldung: 20.03.1991
(73) Patentinhaber: BÜHLER AG, 9240 Uzwil (CH)
(72) Erfinder: GMUER, Bruno, CH-9014 St. Gallen (CH)
(74) Vertreter: von Samson-Himmelstjerna, Friedrich R., Dipl.-Phys.
(86) Internationale Anmeldenummer: CH9000042
(87) Internationale Veröffentlichungsnummer: WO9011496

(56) Entgegenhaltungen:
- CH-A- 138 635
- DE-A- 2 813 875
- GB-A- 2 143 960

## Beschreibung

Die Erfindung bezieht sich auf eine Drehgefäßwaage mit einem in einer Ummantelung um eine horizontal liegende Achse drehbar gelagerten Bechergefäß und mechanischen Zwangsmitteln zur Bewegung des Bechergefäßes von einer Füllposition in eine Entleerposition.

Eine derartige Drehgefäßwaage ist aus der GB-A-2 143 960 bekannt.

Die französische Patentschrift FR-PS Nr. 1 131 825 zeigt eine automatische Waage wie sie in der getreideverarbeitenden Industrie zu Kontrollzwecken und zur Steuerung des Produktflusses seit vielen Jahrzehnten angewendet wird. Es handelt sich dabei um eine automatische Betriebsweise im Rahmen der klassischen Wägetechnik. Eine Waagschale wird mit Produkt gefüllt, nach einer kurzen Beruhigunszeit wird das Gewicht der vollen Waagschale erfasst, die Waagschale gekippt, ausgeleert und in die Füllposition zurückgebracht. Es kann zumindest bei erstmaligem Verwiegen das Taragewicht festgestellt und das verwogene Schüttgut errechnet werden. Vielfach wird das Taragewicht kompensiert, sodass bei beliebiger Wiederholung jedesmal das präzise Gewicht jeder Schüttung feststellbar ist. Mit entsprechender Steuerung von Dosiereinrichtungen lässt sich so auch ein bestimmtes Gewicht voreinstellen, sodass mit jeder Verwiegung ein identisches Gewicht, Z. Bsp. je 50 kg, abgegeben wird. Im Falle von eichpflichtigen Waagen wird diese periodisch überprüft.

Der eigentliche Nachteil dieses noch weitverbreiteten Waagensystems liegt darin, dass der bauliche Aufwand fast unabhängig von der Grösse der Waage, z. Bsp. in dem Bereich eines Waagschaleninhaltes von 5 bis 100 kg, in jedem Fall etwa gleich gross ist. Eine kleinere Waage kann so nicht sehr preisgünstig hergestellt werden. Ein weiterer Nachteil liegt in dem relativ komplizierten mechanischen Aufbau. Die Reinigung ist erschwert, obwohl auf dem Mechanismus besonders viele Staubablagerungsstellen gegeben sind. In Nahrungsmittelverarbeitungsbetrieben werden heute hohe Anforderungen an die Hygiene gestellt. Eine völlige Einmantelung schützt die Mechanik gegen äussere Einwirkungen, schafft aber im inneren tote Räume, in denen Produktablagerungen bis zum Verderben der Nahrungs- bzw. Futtermittel verbleiben können.

Die DDR-Patentschrift Nr. 12 969 zeigt eine gehäuselose, automatische Waage mit einer drehbar gelagerten Lasttrommel. Das Wägegefäss ist als runde Trommel ausgebildet und erlaubt eine sehr rasche Drehung. Für stark staubende Güter, etwa Mehl oder Futterkomponenten, würde sich die in der DDR-Patentschrift Nr. 12 969 gezeigte, gehäuselose Ausführung nicht eignen, respektiv es müssten Extra-Einrichtungen zur Staubfreihaltung der Umgebung angebracht werden.

Der Erfindung wurde nun die Aufgabe gestellt; eine Drehgefässwaage mit einfachen baulichen Mitteln, d.h. auch preisgünstig, zu entwickeln, die in Bezug auf Hygiene eine möglichst optimale Betriebsweise erlaubt.

Vorstehende Aufgabe wird durch den Gegenstand des Anspruchs 1 gelöst, also dadurch, daß bei der eingangs genannten gattungsgemäßen Drehgefäßwaage das Bechergefäß im Öffnungsbereich in Bezug auf den Drehpunkt der Achse eine drehzylindrische Form aufweist und der äußere Rand des Bechergefäßes in einem wandnahen Bereich die Ummantelung rotationsschleusenartig streift.

Damit streift der äußere Becherrand ähnlich wie die Flügel-Extremitäten eines Schleusenrotors im wandnahen Bereich des Gehäuses und hält dieses sauber. Die Bewegung des Wägegefäßes in dem schleusenartig konzipierten Gehäuse resp. in der Ummantelung hat also mit jedem Wägevorgang eine selbstreinigende Wirkung. Damit ist es aber geglückt, mit einem Minimum an Einzelelementen bzw. Bauteilen und einfachen Bauformen auch eine hygienische Betriebsweise sicherzustellen.

Die Erfindung erlaubt ferner eine Anzahl besonders vorteilhafter Ausgestaltungen.

So kann im Sinne der Erfindung der Boden des Bechergefäßes eine zylindrische Form aufweisen.

Je nach Art der zu verwiegenden Produkte werden die seitlichen Begrenzungswände des Bechergefäßes mit wenig Abstand parallel zu den seitlichen Wänden der Ummantelung ausgebildet, oder das Bechergefäß weist im Querschnitt eine zylindrische Form auf.

Eine ganz besonders interessante Maßnahme in Bezug auf die Reinhaltung der Waageinnenflächen ergibt sich durch die Verwendung einer Reinigungs-Abstreifvorrichtung. Durch entsprechend bewußte Formgebung des Wägegefäßes sowie der Gehäusewandflächen kann eine nahezu hundertprozentige Reinigungswirkung in den für eine manuelle Reinigung sehr schlecht zugänglichen engen Zwischenräumen erzielt werden.

Bevorzugt wird die Reinigungseinrichtung als einfacher Abstreifer aus elastischen Materialien hergestellt. Bei höheren Anforderungen kann sie aus gut gleitfähigen Stoffen wie Bronze oder Graphit usw. gebildet sein. Wesentlich ist hierbei auch, daß der jeweiligen Form sowohl der Bodenfläche wie der Seitenflächen angepaßte Abstreifer zugeordnet werden.

Im Gegensatz zu einer Rotationsschleuse, bei der der Schleusenrotor ständig volle Drehbewegungen durchführt, braucht das als Wägegefäß dienende Bechergefäß nur eine 180°-Drehung von der Füllposition zu der Leerposition durchzuführen. Für die Gewährleistung dieser Funktion genügen einfachste, preisgünstig im Handel erhältliche Elemente für die Zwangsbewegung des Bechergefäßes. Hierzu weisen die mechanischen Zwangsmittel einen Drehantrieb zur Drehung des Bechergefäßes um 180° auf, der insbesondere pneumatisch betätigbar ist.

Ein entscheidender Vorteil liegt ferner darin, daß die Ummantelung druckfest ausgebildet und/oder die Anschlußflächen oben und unten gleich groß sind, so daß die Verwiegung sowohl im Überdruck wie auch im Unterdruck stattfinden kann.

Bevorzugt ist die aus dem Bechergefäss und der Ummantelung gebildete Verwiegeeinheit über Gewichtselemente aufgehängt.

Für ganz besonders hohe Anforderungen an die Genauigkeit sowie sehr kleine Füllgewichte in dem Bechergefäss können das Taragewicht von Wägegefäss und Ummantelung über ein Hebelsystem mit einem Gegengewicht ausgeglichen werden.

Die Erfindung wird nun anhand von Ausführungsbeispielen mit weiteren Einzelheiten erläutert.
Dabei zeigen:
- die Fig. 1: einen Prinzipquerschnitt durch eine Drehgefässwaage,
- die Fig. 2: eine Ansicht sowie schematisch den Antrieb für die Bewegung des Bechergefässes,
- die Fig. 3a - 3e: verschiedene Positionen des Bechergefässes für eine einmalige Verwiegung.
- die Fig. 4: zeigt einen Schnitt IV - IV der Figur 1
- die Fig. 5: zeigt eine weitere Ausführungsform mit Ausgleichsgewicht für die Verwiegeeinheit.

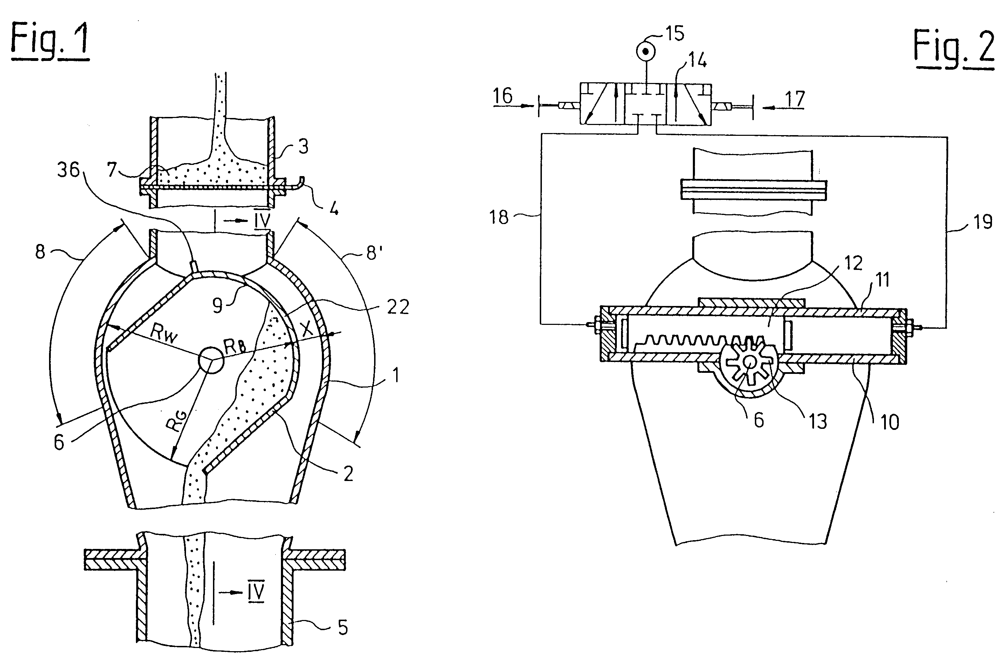

In der Figur 1 ist die Drehgefässwaage zu Beginn der Entleerung dargestellt. Die Drehgefässwaage besteht aus folgenden Hauptelementen: eine Ummantelung 1, ein als Wägegefäss dienendes Bechergefäss 2, eine Produktzuführung 3, ein Zuführschieber 4 sowie ein Produktabführkanal 5. Das Bechergefäss 2 ist an einer horizontalen Achse 6 gelagert. Es wird bevorzugt die klassische Methode der Chargenverwiegung angewendet. Bei Beginn der Verwiegung wird jeweils die Produktzuführung unterbrochen, was mit dem in geschlossener Position dargestellten Zuführschieber 4 und dem darüber liegenden Produkthaufen 7 zum Ausdruck kommt. Die Ummantelung 1 weist zwei seitliche Abschnitte 8 bzw. 8' mit zylindrischer Form auf. Der Wandabschnitt 8 bzw. 8' weist einen inneren Radius RW auf, der nur um ein geringes Mass grösser ist als der Radius RG der äusseren Hüllkante dem offenen Teiles des um die Achse 6 schenkenden Bechergefässes 2. Der Boden 22 des Bechergefässes 2 weist bevorzugt einen um ein Mass "X" kleineren Radius RB auf. In dem entsprechenden Zwischenraum ist ein Abstreifer 36 angeordnet, wobei dieser die Drehbewegung des Bechergefässes für seine Arbeit ausnützt. Es ist möglich die Steuerung so auszubilden, dass abwechselnd eine Drehbewegung in beide Richtungen durchgeführt wird, sodass alle Innenflächen der Ummantelung gereinigt werden.

In der Figur 2 ist ein Antrieb 10 für die Drehbewegung des Bechergefässes 2 dargestellt. Der Antrieb 10 besteht aus einem Pneumatikzylinder 11, sowie einem Zahnkolben 12, welcher über ein Zahnritzel 13 die Achse 6 dreht. Die Bewegung des Zahnkolbens 12 wird von einem pneumatischen Ventil 14 gesteuert. Schematisch weist das Ventil 14 einen Druckluftanschluss 15 auf, wobei wahlweise durch Betätigen der Stössel 16 resp. 17 über Druckleitungen 18 resp. 19 die Bewegung des Bechergegefässes 2 sichergestellt ist.

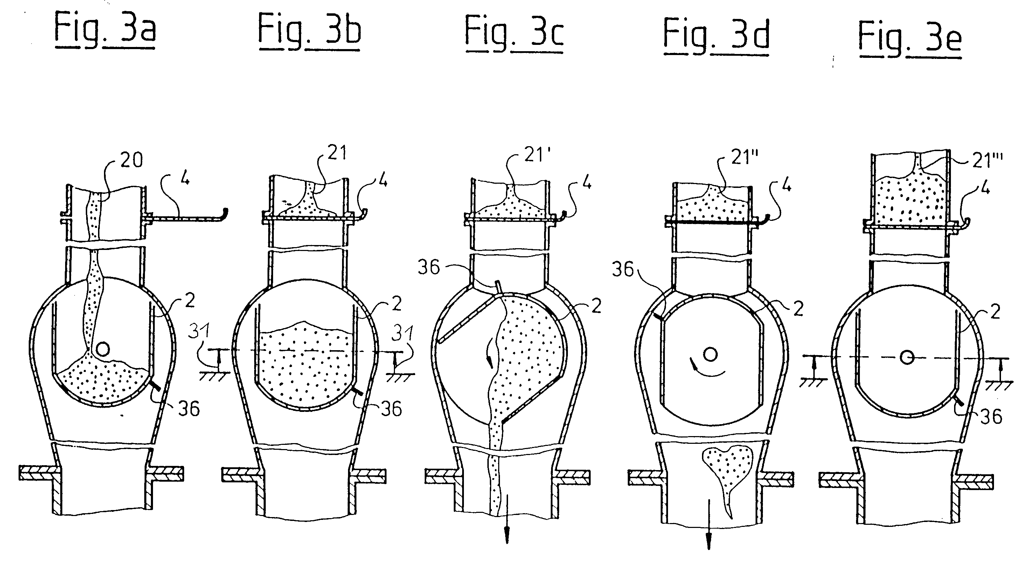

In den Figuren 3a bis 3e sind verschiedene Stellungen des Bechergefässes 2 festgehalten. In der Figur 3a ist der Zuführschieber 4 in offener Stellung. Das Schüttgut 20 fliesst direkt in das Bechergefäss 2. Je nach Art des Verwiegungproblemes, z.Bsp. bei bekannten Einströmmengen, kann der Zuführschieber 4 einen vorgegebenen Zeitabschnitt offen bleiben. In der Figur 3b ist die Produktzuführung in das Wägegefäss 2 unterbrochen. Das Produkt 21 staut sich auf dem Zuführschiebe 4. Nach der erforderlichen Beruhigungszeit wird das Bechergefäss 2 mitsamt dem Inhalt durch entsprechende Gewichtsmesselemente 31 verwogen. Sodann wird, wie in Figur 3c gezeigt ist, der Inhalt des Wägegefässes 2 entleert und das vollständig entleerte Bechergefäss 2 (Figur 3d) wieder zurück in die Füllposition gedreht. Bevor ein neuer Verwiegezyklus beginnen kann, wird noch das Leergewicht des Bechergefässes 2 ermittelt und aus der Differenz "Vollgewicht abzüglich Leergewicht" das tatsächliche Gewicht einer Schüttung errechnet (Figur 3e). Ein zweiter Verwiegezyklus 3a bis 3e kann beginnen. Während der verschiedenen Verwiegephasen von 3b bis 3e kann das Gut 21 bis 21 ''' über dem Zuführschieber 4 akkumuliert werden.

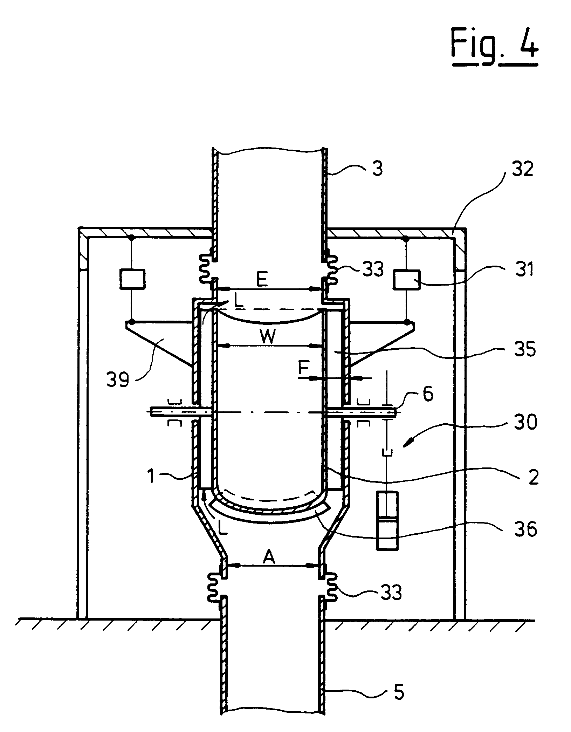

Die Fig. 4 ist analog der Fig. 1 und ist als Schnitt IV - IV der Fig. 1 dargestellt. Das Bechergefäss 2 bildet zusammen mit der Ummantelung 1 eine Verwiegeeinheit 30. Die Verwiegeeinheit 30 ist über die Gewichtsmesselemente 31 an einem festen Ständer 32 aufgehängt. Die Produktzuführung 3 sowie der Produktabführkanal 5 sind ebenfalls mit den ortsfesten Bauteilen verbunden. Zwischen der Verwiegeeinheit 30 sowie den festen Bauteilen ist an der Eintrittsseite sowie der Austrittsseite je eine flexible Manschette 33 angeordnet.

Ein ganz interessanter Ausgestaltungsgedanke liegt darin, den freien Querschnitt E in dem Bereich der Produktzuführung 3 sowie den freien Querschnitt A in den Bereich des Produktabführkanals 5 gleich gross zu machen. Zwischen der Aussenwand des Bechergefässes 2 sowie der Ummantelung 1 ist ein genügender Abstand von z. Bsp. etwa Fingerbreite vorgesehen, sodass ein Durchströmkanal L für einen ständigen Druckausgleich zwischen der Oberseite und der Unterseite des Bechergefässes 2 entsteht. Bevorzugt werden an dem Bechergefäss 2 ein Abstreifer 35 und in dem gerundeten Bodenabschnitt der Abstreifer 36 angeordnet, sodass damit zumindest die sehr schlecht zugänglichen Innenwandteile der Ummantelung mit der Drehbewegung des Bechergefässes 2 in normalem Betrieb gereinigt werden.

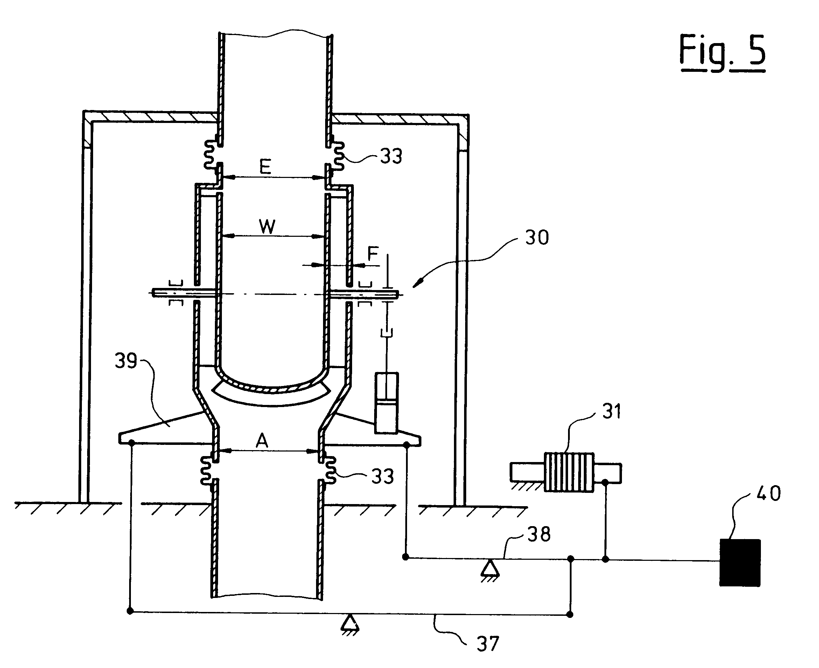

In der Figur 5 ist ein an sich gleicher Grundaufbau wie in der Fig. 4 dargestellt, jedoch mit einem Bechergefäss 2 für kleinste Verwiegungen von z. Bsp. unter 5 bzw unter 1 kg pro Verwiegung. Die Verwiegeeinheit 30 ist auf einem Hebelwerk 37, 38 über Konsolen 39 abgestützt. Das gesamte Taragewicht der Verwiegeeinheit 30 ist durch ein Ausgleichgewicht 40 kompensiert. Das Gewichtssignal, das von dem Gewichtsmesselement 31 angezeigt wird, ist somit nur noch der jeweilige Waageninhalt. Da auch hier, wie in Fig. 4, alle 3 Querschnitte E, bzw W und A übereinstimmen, gibt es auch keine störenden Luftdrücke.

## Patentansprüche

1. Drehgefäßwaage mit
a) einem in einer Ummantelung (1) um eine horizontal liegende Achse (6) drehbar gelagerten Bechergefäß (2) und
b) mechanischen Zwangsmitteln (10) zur Bewegung des Bechergefäßes (2) von einer Füllposition in eine Entleerposition,
dadurch gekennzeichnet, daß
c) das Bechergefäß (2) im Öffnungsbereich in Bezug auf den Drehpunkt der Achse (6) eine drehzylindrische Form aufweist und
d) der äußere Rand des Bechergefäßes (2) in einem wandnahen Bereich die Ummantelung (1) rotationsschleusenartig streift.

2. Drehgefäßwaage nach Anspruch 1, dadurch gekennzeichnet, daß das Bechergefäß (2) zusammen mit der Ummantelung (1) eine Verwiegeeinheit (30) bildet.

3. Drehgefäßwaage nach einem der vorstehenden Ansprüche, dadurch gekennzeichnet, daß der Boden (22) des Bechergefäßes (2) eine drehzylindrische Form aufweist.

4. Drehgefäßwaage nach einem der vorstehenden Ansprüche, dadurch gekennzeichnet, daß die seitlichen Begrenzungswände des Bechergefäßes (2) im Abstand parallel zu den seitlichen Wänden der Ummantelung (1) ausgebildet sind.

5. Drehgefäßwaage nach einem der vorstehenden Ansprüche, dadurch gekennzeichnet, daß das Bechergefäß (2) eine zylindrische Form aufweist.

6. Drehgefäßwaage nach einem der vorstehenden Ansprüche, dadurch gekennzeichnet, daß die mechanischen Zwangsmittel einen Antrieb (10) zur Drehung des Bechergefäßes (2) um 180° aufweisen.

7. Drehgefäßwaage nach einem der vorstehenden Patentansprüche, dadurch gekennzeichnet, daß die Ummantelung (1) druckfest ausgebildet ist.

8. Drehgefäßwaage nach einem der vorstehenden Patentansprüche, dadurch gekennzeichnet, daß die Anschlußflächen (E,A) der Ummantelung (1) oben und unten gleich groß sind.

9. Drehgefäßwaage nach einem der vorstehenden Patentansprüche, dadurch gekennzeichnet, daß an dem Bechergefäß (2) auf den beiden seitlichen Wandabschnitten ein Abstreifer (35) abgeordnet ist.

10. Drehgefäßwaage nach einem der vorstehenden Patentansprüche, dadurch gekennzeichnet, daß im Bereich der gerundeten Bodenaußenseite ein Abstreifer (36) angeordnet ist.

11. Drehgefäßwaage nach einem der Patentansprüche 2 bis 10, dadurch gekennzeichnet, daß das Bechergefäß (2) mit der Ummantelung (1) an Gewichtselementen (31) aufgehängt ist.

12. Drehgefäßwaage nach einem der Patentansprüche 2 bis 11, dadurch gekennzeichnet, daß zum Ausgleich des Taragewichtes von Bechergefäß (2) und Ummantelung (1) ein Hebelwerk (37, 38) mit entsprechendem Ausgleichsgewicht (40) der Verwiegeeinheit (30) zugeordnet ist.

## Claims

1. Rotary-receptacle balance with
a) a cup-shaped receptacle (2) mounted in a casing (1) to be rotatable about a horizontally situated shaft (6), and
b) mechanical force-applying means (10) for moving the cup-shaped receptacle (2) from a filling position into an emptying position,
characterised in that
c) the cup-shaped receptacle (2) has, in the opening region, with respect to the centre of rotation of the shaft, a rotationally cylindrical form, and
d) the outer edge of the cup-shaped receptacle (2) in a region near the wall grazes over the casing (1) in the manner of a rotational air lock or transfer lock.

2. Rotary-receptacle balance according to claim 1, characterised in that the cup-shaped receptacle (2) together with the casing (1) forms a weigh unit (30).

3. Rotary-receptacle balance according to one of the preceding claims, characterised in that the bottom (22) of the cup-shaped receptacle (2) has a rotationally cylindrical shape.

4. Rotary-receptacle balance according to one of the preceding claims, characterised in that the lateral boundary walls of the cup-shaped receptacle (2) are arranged with spacing parallel to the lateral walls of the casing (1).

5. Rotary-receptacle balance according to one of the preceding claims, characterised in that the cup-shaped receptacle (2) has a cylindrical shape.

6. Rotary-receptacle balance according to one of the preceding claims, characterised in that the mechanical force-applying means comprise a drive (10) for rotating the cup-shaped receptacle (2) through 180°.

7. Rotary-receptacle balance according to one of the preceding claims, characterised in that the casing (1) is of pressure-resistant construction.

8. Rotary-receptacle balance according to one of the preceding claims, characterised in that the connecting surfaces (E, A) of the casing (1) above and below are of the same size.

9. Rotary-receptacle balance according to one of the preceding claims, characterised in that a stripper element (35) is arranged on the cup-shaped receptacle (2) at the two lateral wall portions.

10. Rotary-receptacle balance according to one of the preceding claims, characterised in that a stripper element (36) is arranged in the region of the rounded outside of the bottom.

11. Rotary-receptacle balance according to one of claims 2 to 10, characterised in that the cup-shaped receptacle (2) is suspended, with the casing (1), on weight-measuring elements (31).

12. Rotary-receptacle balance according to one of claims 2 to 11, characterised in that a lever mechanism (37, 38) with a suitable compensation weight (40) is associated with the weigh unit (30), to compensate for the tare weight of cup-shaped receptacle (2) and casing (1).

## Revendications

1. Balance à récipient tournant, comprenant :
a) un récipient en forme de godet (2) monté dans une enveloppe (1) de façon à pouvoir tourner autour d'un axe horizontal (6) et
b) des moyens mécaniques de commande forcée (10) permettant de déplacer le récipient en forme de godet (2) d'une position de remplissage à une position de vidage,
caractérisée en ce que :
c) dans sa zone d'ouverture, le récipient en forme de godet (2) comporte une forme cylindrique de révolution vis-à-vis du centre de rotation de l'axe (6) et,
d) dans une zone voisine de la paroi, le bord extérieur du récipient en forme de godet (2) effleure l'enveloppe (1) à la façon d'une écluse rotative.

2. Balance à récipient tournant suivant la revendication 1, caractérisée en ce que le récipient en forme de godet (2) constitue avec l'enveloppe (1) une unité de pesage (30).

3. Balance à récipient tournant suivant l'une des revendications précédentes, caractérisée en ce que le fond (22) du récipient en forme de godet (2) a une forme cylindrique de révolution.

4. Balance à récipient tournant suivant l'une des revendications précédentes, caractérisée en ce que les parois latérales extrêmes du récipient en forme de godet (2) sont parallèles aux parois latérales de l'enveloppe (1) à une certaine distance de ces dernières.

5. Balance à récipient tournant suivant l'une des revendications précédentes, caractérisée en ce que le récipient en forme de godet (2) a une forme cylindrique.

6. Balance à récipient tournant suivant l'une des revendications précédentes, caractérisée en ce que les moyens mécaniques de commande forcée comprennent un entraînement (10) permettant de faire tourner de 180° le récipient en forme de godet (2).

7. Balance à récipient tournant suivant l'une des revendications précédentes, caractérisée en ce que l'enveloppe (1) est résistante à la pression.

8. Balance à récipient tournant suivant l'une des revendications précédentes, caractérisée en ce que les surfaces de raccordement (E, A) de l'enveloppe (1) situées à la partie supérieure et la partie inférieure ont des dimensions identiques.

9. Balance à récipient tournant suivant l'une des revendications précédentes, caractérisée en ce qu'un racleur (35) est associé au récipient en forme de godet (2) sur ses deux sections latérales de paroi.

10. Balance à récipient tournant suivant l'une des revendications précédentes, caractérisée en ce qu'un racleur (36) est disposé dans la zone de la face extérieure arrondie du fond.

11. Balance à récipient tournant suivant l'une des revendications 2 à 10, caractérisée en ce que le récipient en forme de godet (2) est suspendu, avec l'enveloppe (1), à des éléments de pesage (31).

12. Balance à récipient tournant suivant l'une des revendications 2 à 11, caractérisée en ce que, pour l'équilibrage du poids de tarage du récipient en forme de godet (2) et de l'enveloppe (1), un système à leviers (37, 38) comportant un contre-poids d'équilibrage (40) approprié est associé à l'unité de pesage (30).
